(19) Europäisches Patentamt
European Patent Office
Office européen des brevets

(11) EP 0 832 935 B1

(12) EUROPÄISCHE PATENTSCHRIFT

(45) Veröffentlichungstag und Bekanntmachung des Hinweises auf die Patenterteilung:
**13.01.1999 Patentblatt 1999/02**

(51) Int Cl.[6]: **C08L 83/05**, C08L 83/07, C09D 183/04

(21) Anmeldenummer: **97111093.7**

(22) Anmeldetag: **03.07.1997**

# (54) Vernetzbare Zusammensetzungen enthaltend aliphatisch ungesättigte Kohlenwasserstoffreste aufweisende Organopolysiloxane

Cross-linkable compositions containing organopolysiloxanes having aliphatic unsaturated hydrocarbon groups

Compositions réticulables contenant des organopolysiloxanes ayant des groupes hydrocarbonés à insaturation aliphatique

(84) Benannte Vertragsstaaten:
**BE DE GB**

(30) Priorität: **04.07.1996 DE 19627022**

(43) Veröffentlichungstag der Anmeldung:
**01.04.1998 Patentblatt 1998/14**

(73) Patentinhaber: **Wacker-Chemie GmbH
81737 München (DE)**

(72) Erfinder:
- **Herzig, Christian, Dr.
83329 Waging am See (DE)**
- **Huettner, David, Dr.
Tecumseh, MI 49286 (US)**
- **Beekel, Kathy
Adrian, MI 49221 (US)**

(74) Vertreter: **Deffner-Lehner, Maria, Dr. et al
Wacker-Chemie GmbH,
Hanns-Seidel-Platz 4
81737 München (DE)**

(56) Entgegenhaltungen:
**EP-A- 0 403 890**
**EP-A- 0 640 662**
**EP-A- 0 694 573**

- **PATENT ABSTRACTS OF JAPAN vol. 018, no. 443 (C-1239), 18.August 1994 & JP 06 136129 A (TORAY DOW CORNING SILICONE CO LTD), 17.Mai 1994,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 832 935 B1

**Beschreibung**

Die Erfindung betrifft vernetzbare Zusammensetzungen enthaltend

(A) aliphatisch ungesättigte Kohlenwasserstoffreste aufweisende Organopolysiloxane
(B) Si-gebundene Wasserstoffatome aufweisende Organopolysiloxane
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel

sowie die Verwendung der vernetzbaren Zusammensetzungen zur Herstellung von Klebstoff abweisenden Überzügen.

In EP 0403890 B1 (Bayer AG; ausgegeben am 16.03.1994) bzw. der entsprechenden US-A 5,077,369 sowie EP 0640662 A2 (Bayer AG; ausgegeben am 01.03.1995) werden additionsvernetzende Organopolysiloxanmischungen zur Herstellung von haftungsmindernden Beschichtungen beschrieben. Die in den Mischungen enthaltenen Organopolysiloxane sind verzweigt, wobei die Verzweigungsstellen trifunktionelle Monoorganoosiloxygruppen, sogenannte T-Einheiten, bzw. tetrafunktionelle Siloxygruppen, sogenannte Q-Einheiten, darstellen. Desweiteren besitzen sie Triorganosiloxygruppen, sogenannte M-Einheiten, als Endgruppen, die mindestens einen ungesättigten Kohlenwasserstoffrest enthalten. Die Herstellung der Organopolysiloxane erfolgt durch Hydrolyse von Chlorsilanen und anschließender Polymerisation mit niedermolekularen cyclischen Diorganopolysiloxanen. Da die T-Einheiten und Q-Einheiten nicht der gleichen Kinetik wie die D-Einheiten (Diorganosiloxaneinheiten) und M-Einheiten gehorchen, ist es schwierig, eine gezielte Verteilung der Verzweigungsstellen im Polymer zu erreichen und damit einen definierten mittleren Abstand zwischen diesen einzustellen.

In US-A 4,772,515 (Shin-Etsu Chemical Co.; ausgegeben am 20.09.1988) werden ebenfalls additionsvernetzende Organopolysiloxanmischungen zur Herstellung von klebstoffabweisenden Organopolysiloxanbeschichtungen beansprucht. Die enthaltenen Organopolysiloxane weisen pro Molekül mindestens zwei Verzweigungsstellen in Form von T-Einheiten auf und die Alkenylgruppen aufweisenden M-Einheiten sind über D-Einheiten an die T-Einheiten gebunden. Die Herstellung der Organopolysiloxane erfolgt durch Reaktion von Alkyltrimethoxysilanen mit Octamethylcyclotetrasiloxan in Gegenwart eines basischen Katalysators, anschließender Hydrolyse und Umsetzung mit Alkenyldisiloxanen.

Aus US-A 5,087,720 (Shin-Etsu Chemical Co.; ausgegeben am 11.02.1992) sind Polysilethylensiloxane mit alternierenden Siloxan-Carbo-Strukturen bekannt. Die Polymere sind nicht verzweigt, weisen zwischen den Carboeinheiten ausschließlich Disiloxygruppen auf und enthalten nur zwei endständige Si-gebundene Vinylgruppen.

In US-A 5,082,915 (Shin-Etsu Chemical Company, Ltd.; ausgegeben am 21.01.1992) sind Papierbeschichtungsmassen beschrieben, die ein Organopolysiloxan mit mindestens zwei Si-gebundenen Alkenylgruppen und mindestens einem Si-gebundenem Radikal der Formel $-(CH_2)_m-(R^1{}_2SiO)_n-SiR^1{}_3$ enhalten, wobei $R^1$ ein einwertiger Kohlenwasserstoffrest, bevorzugt ein Methylrest, m eine ganze Zahl von 2 bis 8 und n eine ganze Zahl von 5 bis 100 bedeutet. Die SiC-gebundene Siloxanseitenkette in dem verzweigten Organopolysiloxan wird durch Umsetzung eines linearen Organopolysiloxans mit einer seitenständigen, Si-gebundenen Alkenylgruppe, bevorzugt einer Si-gebundenen Vinylgruppe, mit einem linearen Organopolysiloxan mit einem Si-gebundenen Wasserstoffatom an einem Ende und Si-gebundenen, gesättigten Kohlenwasserstoffresten, bevorzugt Methylresten, am anderen Ende in Gegenwart eines Hydrosilylierungskatalysators erhalten. Die hierfür benötigten monofunktionellen, Si-gebundene Wasserstoffatome aufweisenden Organopolysiloxane können nur aufwendig und damit unwirtschaftlich hergestellt werden.

In US-A 5,581,008 (Dow Corning Toray Silicone Co., ausgegeben am 03.12.1996) ist ein Verfahren zur Herstellung von verzweigten Organosiliciumverbindungen beschrieben.

Es bestand die Aufgabe, aliphatisch ungesättigte Kohlenwasserstoffreste aufweisende Organopolysiloxane bereitzustellen, die in einem einfachen Verfahren hergestellt werden können, die keine größeren Mengen an Ausgangsmaterialien enthalten sollen, die verzweigt sein sollen, die die aliphatisch ungesättigten Kohlenwasserstoffreste ausschließlich in den Kettenenden enthalten, die auch mit niedrigen Viskositäten erhältlich sind und die mit Si-gebundenen Wasserstoffatome aufweisenden Organopolysiloxanen in Gegenwart von die Anlagerung von Si-gebundenem Wasserstoff an aliphatische Mehrfachbindung fördernden Katalysatoren rasch vernetzen. Weiterhin bestand die Aufgabe, vernetzbare Zusammensetzungen bereitzustellen, die zur Herstellung von klebrige Stoffe abweisenden Überzügen geeignet sind. Die Aufgabe wird durch die Erfindung gelöst.

Gegenstand der Erfindung sind vernetzbare Zusammensetzungen enthaltend

(A) aliphatisch ungesättigte Kohlenwasserstoffreste aufweisende Organopolysiloxane
(B) Si-gebundene Wasserstoffatome aufweisende Organopolysiloxane
(C) die Anlagerung von Si-gebundenem Wasserstoff an aliphatische Mehrfachbindung fördernde Katalysatoren und gegebenenfalls

(D) die Anlagerung von Si-gebundenem Wasserstoff an aliphatische Mehrfachbindung bei Raumtemperatur verzögernde Mittel,

dadurch gekennzeichnet, daß als (A) aliphatisch ungesättigte Kohlenwasserstoffreste aufweisende Organopolysiloxane solche enthaltend

(a) je Molekül mindestens eine Einheit der allgemeinen Formel

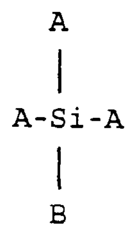

(I),

wobei A eine Gruppe der allgemeinen Formel

$$-(OSiR^1R^2)_z-(OSiR_2)_x-Y-SiR_2O-$$

bedeutet, R gleich oder verschieden ist und einen einwertigen, aliphatisch gesättigten oder aromatischen Kohlenwasserstoffrest mit 1 bis 12 Kohlenstoffatomen je Rest bedeutet,
$R^1$ eine Gruppe der allgemeinen Formel

$$-OSiR_2-Y-SiR_2O-$$

bedeutet,
$R^2$ die Bedeutung von R, $R^1$ oder R' hat, wobei R' einen einwertigen, aliphatisch gesättigten oder aromatischen Kohlenwsserstoffrest mit 1 bis 12 Kohlenstoffatomen je Rest, der ein oder mehrere Heteroatome ausgewählt aus der Gruppe von O, S, N, Si und Ti enthält, bedeutet,
Y eine zweiwertige Kohlenwasserstoffgruppe der allgemeinen Formel

$$-CH_2CHR^5(-R^4)_v-$$

bedeutet, $R^4$ einen zweiwertigen Kohlenwasserstoffrest mit 1 bis 10 Kohlenwasserstoffatomen je Rest oder eine chemische Bindung bedeutet, wenn v den Wert 0 hat,
$R^5$ ein Wasserstoffatom ist oder die Bedeutung von R hat,
v 0 oder 1 ist,
x gleich oder verschieden ist, 0 oder 1 ist und
z gleich oder verschieden ist, 0 oder 1 ist,
und B die Bedeutung von A oder R oder R' hat, mit der Maßgabe, daß B gleich R oder R' ist, wenn x 0 ist,

(b) je Molekül mindestens eine Einheit der allgemeinen Formel

$$O_{1/2}SiR_2R^3 \qquad (II),$$

wobei R die oben dafür angegebene Bedeutung hat und
$R^3$ einen aliphatisch ungesättigten Kohlenwassserstoffrest der allgemeinen Formel

$$H_2C=CR^5(-R^4)_v-$$

bedeutet, wobei $R^4$ und $R^5$ die oben dafür angegebene Bedeutung haben,

(c) gegebenenfalls Einheiten der allgemeinen Formel

$$O_{1/2}SiR_3 \qquad (III),$$

wobei R die oben dafür angegebene Bedeutung hat,

(d) gegebenenfalls Einheiten der allgemeinen Formel

$$SiR_2O \qquad (IV),$$

wobei R die oben dafür angegebene Bedeutung hat, und

(e) gegebenenfalls Einheiten der allgemeinen Formel

$$O_{1/2}SiR_2\text{-}Y\text{-}SiR_2O_{1/2} \qquad (V),$$

wobei R die oben dafür angegebene Bedeutung hat,

verwendet werden.

Gegenstand der Erfindung sind weiterhin vernetzbare Zusammensetzungen, dadurch gekennzeichnet, daß als (A) aliphatisch ungesättigte Kohlenwasserstoffreste aufweisende Organopolysiloxane, solche verwendet werden, herstellbar indem in einem ersten Schritt
Verbindungen (1) der allgemeinen Formel

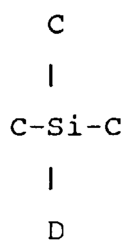

wobei C einen Rest der allgemeinen Formel

$$-(OSiR^6R^7)_z\,(OSiR_2)_xH$$

bedeutet, wobei x und z die oben dafür angegebene Bedeutung haben,
$R^6$ einen Rest der allgemeinen Formel

$$-OSiR_2H$$

bedeutet und $R^7$ die Bedeutung von R, R' oder $R^6$ hat, wobei R und R' die oben dafür angegebene Bedeutung haben,
und D die Bedeutung von C oder R oder R' hat, mit der Maßgabe, daß D gleich R oder R' ist, wenn x 0 ist,
und gegebenenfalls Verbindungen (2) der allgemeinen Formel

$$HR_2SiO(R_2SiO)_nSiR_2H$$

wobei R die oben dafür angegebene Bedeutung hat und

n 0 oder eine ganze Zahl im Wert von 1 bis 100 ist, mit Organo(poly)siloxanen (3) der allgemeinen Formel

$$R^3R_2SiO(R_2SiO)_mSiR_2R^3$$

wobei R und $R^3$ die oben dafür angegebene Bedeutung haben und m 0 oder eine ganze Zahl im Wert von 1 bis 200 ist,
und überschüssige Organo(poly)siloxane (3) destillativ entfernt werden,
in Gegenwart von die Anlagerung von aliphatische Doppelbindung an Si-gebundenen Wasserstoff fördernde Katalysatoren (4) umgesetzt werden,
wobei das eingesetzte Verhältnis von aliphatischer Doppelbindung in Organo(poly)siloxan (3) zu Si-gebundenem Wasserstoff in Verbindung (1) und (2) 1,3 bis 5,0 beträgt,

und gegebenenfalls in einem zweiten Schritt die so erhaltenen aliphatisch ungesättigte Kohlenwasserstoffreste aufweisenden Organopolysiloxane mit Organopolysiloxanen (5) ausgewählt aus der Gruppe bestehend aus linearen, endständige Triorganosiloxygruppen aufweisenden Organopolysiloxanen und linearen, endständige Hydroxylgruppen aufweisenden Organopolysiloxanen equilibriert werden.

Unter den erfindungsgemäßen, aliphatisch ungesättigte Kohlenwasserstoffreste aufweisenden Organopolysiloxanen sind sowohl polymere als auch oligomere Siloxane zu verstehen.

Vorzugsweise enthalten die erfindungsgemäßen Organopolysiloxane durchschnittlich je Molekül mindestens zwei Einheiten der Formel (II), bevorzugt durchschnittlich je Molekül mindestens drei Einheiten der Formel (II).

Bevorzugt enthalten die erfindungsgemäßen Organopolysiloxane eine Anzahl trifunktioneller (=T) und/oder tetra funktioneller (=Q) Einheiten der Formel (I) sowie eine Anzahl (=X) von aliphatisch ungesättigte Kohlenwasserstoffreste aufweisende Einheiten der Formel (II), die durch die Gleichungen (i), (ii) und (iii)

(i) nur Einheiten der Formel (I) mit B = R oder R', also im Falle von trifunktionellen Einheiten: $(T+1)\leq X\leq(T+2)$

(ii) nur Einheiten der Formel (I) mit B = A, also im Falle von tetrafunktionellen Einheiten: $(2Q+1)\leq X\leq(2Q+2)$

(iii) Einheiten mit B = R oder R' und B = A, also im Falle von trifunktionellen und tetrafunktionellen Einheiten:

$$(T+2Q+1)\leq X\leq(T+2Q+2)$$

bestimmt sind, wobei

T eine Zahl von 0 bis 10,
Q eine Zahl von 0 bis 5 und
die Summe von T+Q eine Zahl von 1 bis 10 bedeutet.

Die erfindungsgemäßen, aliphatisch ungesättigte Kohlenwasserstoffreste aufweisenden Organopolysiloxane besitzen vorzugsweise eine Viskosität von 20 bis 20 000 $mm^2/s$ bei 25°C, bevorzugt 20 bis 1 000 $mm^2/s$ bei 25°C, besonders bevorzugt 20 bis 500 $mm^2/s$ bei 25°C.

Die erfindungsgemäßen Organopolysiloxane weisen vorzugsweise Jodzahlen zwischen 2 und 20, bevorzugt 4 und 15, auf, wobei die Jodzahl die bei der Addition an die Doppelbindung verbrauchte Jodmenge in Gramm pro 100 Gramm eingesetztes, erfindungsgemäßes Organopolysiloxan angibt.

Beispiele für den Rest R sind jeweils Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenyl-, Naphthyl- und Anthryl- und Phenanthrylrest, Alkarylreste, wie o-, m-, p-Tolylreste, Xylylreste und Ethylphenylreste, Aralkylreste, wie der Benzylrest, sowie der $\alpha$- und der $\beta$ -Phenylethylrest.

Bei dem Rest R handelt es sich bevorzugt um den Methylrest.

Beispiele für Reste R' sind der 2-Methoxyethyl- und der 2-Ethoxyethylrest, der 2-Triethylsilylethylrest, der 3-Diethylaminopropylrest und der 4,4-Dimethyl-4-silaheptylrest.

Beispiele für Gruppen Y sind solche der Formel $-CH_2CH_2-$, $-CH(CH_3)-$, $-(CH_2)_4-$, $-(CH_2)_5-$, $-(CH_2)_6-$, $-(CH_2)_8-$, $-(CH_2)_{10}-$, $-(CH_2)_{12}-$, wobei die Gruppen der Formel $-CH_2CH_2-$, $-CH(CH_3)-$, $-(CH_2)_6-$, $-(CH_2)_8-$ bevorzugt sind und die Gruppe der Formel $-CH_2CH_2-$ besonders bevorzugt ist.

Beispiele für Reste $R^3$ sind der Vinyl-, Allyl-, 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Bevorzugt ist x 1.

Bevorzugt ist z 0.

Bevorzugt ist m 0 oder eine ganze Zahl von 1 bis 40, besonders bevorzugt 0 oder eine ganze Zahl von 1 bis 30.

Beispiele für Verbindungen (1) sind

Octylsilan,
Dodecylsilan,
Phenylsilan,
Methyl-tris(dimethylsiloxy)silan,
Methyl-tris (diethylsiloxy)silan,
n-Propyl-tris(dimethylsiloxy)silan,
n-Octyl-tris(dimethylsiloxy)silan,
Phenyl-tris (dimethylsiloxy)silan,
Tetrakis(dimethylsiloxy)silan,
1,3-Dipropyl-1,1,3,3-tetrakis(dimethylsiloxy)disiloxan und
1,3-Diphenyl-1,1,3,3-tetrakis(dimethylsiloxy)disiloxan,

Beispiele für gegebenenfalls mitverwendete Verbindungen (2) sind

1,1,3,3-Tetramethyldisiloxan,
1,1,3,3,5,5,9,9-Octamethyltetrasiloxan,
1,1,3,3,5,5,9,9,11,11,13,13,15,15-Tetradecamethylheptasiloxan.

Die Menge an gegebenenfalls eingesetzter Verbindung (2) beträgt im erfindungsgemäßen Verfahren soviel, daß der in Verbindung (2) Si-gebundene Wasserstoff weniger als 75%, bevorzugt weniger als 60%, des insgesamt eingesetzten Si-gebundenen Wasserstoffs beträgt.

Beispiele für Organo(poly)siloxane (3) sind

1,3-Divinyl-1,1,3,3-tetramethyldisiloxan,
Mischpolymerisate aus Vinyldimethylsiloxan- und Dimethylsiloxaneinheiten, Mischpolymerisate aus 5-Hexenyldimethylsiloxan- und Dimethylsiloxaneinheiten.

Bei dem erfindungsgemäßen Verfahren kann im ersten Verfahrensschritt eine Art von Verbindung (1) oder verschiedene Arten von Verbindungen (1) eingesetzt werden.

Bei dem erfindungsgemäßen Verfahren kann im ersten Verfahrensschritt eine Art von Organo(poly)siloxan (3) oder verschiedene Arten von Organo(poly)siloxan (3) eingesetzt werden.

Im ersten Schritt des erfindungsgemäßen Verfahrens beträgt das Verhältnis von aliphatischer Doppelbindung im Organo(poly)siloxan (3) zu Si-gebundenem Wasserstoff in den Verbindungen (1) und (2) vorzugsweise 1,5 bis 3,0, bevorzugt 1,6 bis 2,5.

Das erfindungsgemäße Verfahren hat den Vorteil, daß Organopolysiloxane mit niedrigen Viskositäten erhalten werden, die verzweigt sind und aliphatisch ungesättigte Kohlenwasserstoffreste ausschließlich an den Kettenenden aufweisen. Im Gegensatz dazu werden üblicherweise bei Polyadditionsreaktionen durch Umsetzung von linearen Organopolysiloxanen mit mehreren Si-gebundenen Wasserstoffatomen in Form von HRSiO-Einheiten mit linearen Organopolysiloxanen mit Si-gebundenen Vinylgruppen bei einem C=C/Si-H-Verhältnis von 2,0 oder weniger Produkte mit extrem hohen Viskositäten erhalten, wodurch diese praktisch nicht mehr verwendbar sind, da für Beschichtungsanwendungen vergleichsweise niedrige Viskositäten nötig sind.

Als die Anlagerung von Si-gebundenem Wasserstoff an aliphatische Mehrfachbindung fördernde Katalysatoren (4) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (4) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$,

Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6$*$6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (4) wird im ersten Verfahrensschritt vorzugsweise in Mengen von 0,1 bis 50 Gew.-ppm (Gewichtsteilen je Million Gewichtsteilen), bevorzugt in Mengen von 0,5 bis 5 Gew.-ppm, jeweils berechnet als elementares Platin und bezogen auf das Gesamtgewicht der Verbindungen (1) und (2) und Organo(poly)siloxane (3), verwendet.

Der erste Verfahrensschritt wird vorzugsweise beim Druck der umgebenden Atmosphäre, also etwa bei 1020 hPa (abs.), durchgeführt, er kann aber auch bei höheren oder niedrigeren Drücken durchgeführt werden. Ferner wird der erste Verfahrensschritt vorzugsweise bei einer Temperatur von 50°C bis 150°C, bevorzugt 80°C bis 120°C, durchgeführt.

In dem ersten Verfahrensschritt können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden nach dem ersten Verfahrensschritt destillativ entfernt.

Vorzugsweise wird der erste Verfahrensschritt so ausgeführt, daß entweder die Komponenten (1), gegebenenfalls (2), (3) und (4) bei Raumtemperatur homogen vermischt werden und danach auf Reaktionstemperatur gebracht werden, oder indem Komponenten (3) und (4) zusammen vorgelegt werden und nach deren Erwärmen auf Reaktionstemperatur die Komponente (1) und gegebenenfalls (2) zudosiert wird.

Beim ersten Verfahrensschritt, der sogenannten Hydrosilylierung, wird ein Umsatz von vorzugsweise mehr als 95%, bevorzugt mehr als 99% der Si-gebundenen Wasserstoffatome erreicht.

Es ist nicht ganz vermeidbar, daß die erfindungsgemäßen Organopolysiloxane noch Restmengen von Organo (poly)siloxanen (3) enthalten. Restmengen von Organo(poly)siloxanen (3) mit m gleich 0 oder einer ganzen Zahl von 1 bis 5 werden vorzugsweise destillativ entfernt. Organo(poly)siloxane (3) mit m größer 5 können nicht destillativ entfernt werden und verbleiben im Produkt. Die nach dem erfindungsgemäßen Verfahren erhaltenen Organopolysiloxane können daher Organo(poly)siloxane (3) in Mengen von vorzugsweise 0 bis 30 Gew.-%, bevorzugt 0 bis 20 Gew.-%, enthalten.

Die im ersten Verfahrensschritt erhaltenen ungesättigte Kohlenwasserstoffreste aufweisenden Organopolysiloxane können in einem zweiten Verfahrensschritt mit Organopolysiloxan (5) equilibriert werden.

Bei der Equilibrierung ist die Bildung von Cyclen ohne funktionelle Gruppen, die dem Fachmann bekannt ist und die in Mengen von 8 bis 15 Gew.-% vorliegen, unvermeidbar, aber nicht störend. Falls gewünscht, können deren flüchtige Anteile (Cyclen mit 3-9 Si-Atomen) durch Vakuum und höhere Temperaturen aus dem Produktgemisch destillativ entfernt werden. Ebenso wie die Cyclen können bei der Equilibrierung andere nicht erwünschte aber nicht störende Nebenprodukte in kleinen Mengen erhalten werden.

Als Organopolysiloxane (5) werden vorzugsweise solche ausgewählt aus der Gruppe bestehend aus linearen, endständige Triorganosiloxygruppen aufweisenden Organopolysiloxanen der Formel

$$R_3SiO(R_2SiO)_rSiR_3,$$

wobei R die oben dafür angegebene Bedeutung hat und
r 0 oder eine ganze Zahl im Wert von 1 bis 1 000, bevorzugt 100 bis 400, ist, und
linearen, endständige Hydroxylgruppen aufweisenden Organopolysiloxanen der Formel

$$HOR_2SiO(SiR_2O)_rSiR_2OH,$$

wobei R und r die oben dafür angegebene Bedeutung haben.

Das Mengenverhältnis der bei der gegebenenfalls durchgeführten Equilibrierung eingesetzten Organopolysiloxane (5)
und aliphatisch ungesättigte Kohlenwasserstoffreste aufweisenden Organopolysiloxane wird lediglich durch den gewünschten Anteil der aliphatisch ungesättigten Kohlenwasserstoffreste in den bei der gegebenenfalls durchgeführten Equilibrierung erzeugten Organopolysiloxanen und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für basische Katalysatoren sind Alkalihydroxide, wie Natriumhydroxid und Kaliumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2 000 Gew.-ppm, jeweils bezogen auf das Gesamtgewicht der eingesetzten, aliphatisch ungesättigte Kohlenwasserstoffreste aufweisenden Organopolysiloxane und eingesetzten Organopolysiloxane (5), verwendet.

Beispiele für saure Katalysatoren sind Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten, aliphatisch ungesättigte Kohlenwasserstoffreste aufweisenden Organopolysiloxane und eingesetzten Organopolysiloxane (5), verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten, aliphatisch ungesättigte Kohlenwasserstoffreste aufweisenden Organopolysiloxane und eingesetzten Organopolysiloxane (5), mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäßen, aliphatisch ungesättigte Kohlenwasserstoffreste aufweisenden Organopolysiloxane können mit Si-gebundenen Wasserstoff aufweisenden Organopolysiloxanen in Gegenwart von Hydrosilylierungskatalysatoren vernetzt werden. Weiterhin können die erfindungsgemäßen, aliphatisch ungesättigte Kohlenwasserstoffreste aufweisenden Organopolysiloxane auch mit Mercaptogruppen aufweisenden organischen Polymeren vernetzt werden.

Die die erfindungsgemäßen, aliphatisch ungesättigte Kohlenwasserstoffreste aufweisenden Organopolysiloxane enthaltenden vernetzbaren Zusammensetzungen werden vorzugsweise zur Herstellung von klebrige Stoffe abweisenden Überzügen, z. B. zur Herstellung von Trennpapieren, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt.

Bei den erfindungsgemäßen Zusammensetzungen kann eine Art von Organopolysiloxan (A) oder verschiedene Arten von Organopolysiloxan (A) eingesetzt werden.

Als Bestandteil (B) können auch bei den erfindungsgemäßen Zusammensetzungen die gleichen Si-gebundene Wasserstoffatome aufweisenden Organopolysiloxane verwendet werden, die bei allen bisher bekannten Zusammensetzungen aus aliphatisch ungesättigte Kohlenwasserstoffreste, wie Vinylgruppen, aufweisenden Organopolysiloxanen, Si-gebundene Wasserstoffatome aufweisenden Organopolysiloxanen und die Anlagerung von Si-gebundenem Wasserstoff an aliphatische Mehrfachbindung fördernde Katalysatoren eingesetzt werden konnten.

Vorzugsweise enthalten die Organopolysiloxane (B) mindestens 3 Si-gebundene Wasserstoffatome.

Als Bestandteil (B) werden vorzugsweise Organopolysiloxane aus Einheiten der Formel

$$H_eR_fSiO_{\frac{4-(e+f)}{2}},$$

wobei R die oben dafür angegebene Bedeutung hat,
e 0 oder 1,
f 0, 1, 2 oder 3 und
die Summe e+f nicht größer als 3 ist,

bevorzugt solche der Formel

$$H_gR_{3-g}SiO(SiR_2O)_k(SiRHO)_lSiR_{3-g}H_g$$

wobei R die oben dafür angegebene Bedeutung hat,
g 0 oder 1
k 0 oder eine ganze Zahl von 1 bis 100 und
l 0 oder eine ganze Zahl von 1 bis 100 ist,
oder Si-gebundene Wasserstoffatome aufweisende Organosiliciumverbindungen, wie sie in der deutschen Anmeldung mit dem Aktenzeichen 196 02 663.6 der Anmelderin beschrieben sind
oder Mischungen aus den oben genannten Organopolysiloxanen und Organosiliciumverbindungen

verwendet.

Beispiele für Organopolysiloxane (B) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Verfahren zum Herstellen von Organopolysiloxanen (B), auch von solchen Organopolysiloxanen (B) der bevorzugten Art, sind allgemein bekannt.

Organosiliciumverbindungen (B) werden vorzugsweise in Mengen von 0,5 bis 6, bevorzugt 1 bis 3, besonders bevorzugt 1,5 bis 2,5 Grammatom Si-gebundenen Wasserstoffs je Mol Rest $R^3$ in den aliphatisch ungesättigte Kohlenwasserstoffreste aufweisenden Organopolysiloxanen (A) eingesetzt.

Als die Anlagerung von Si-gebundenem Wasserstoff an aliphatische Mehrfachbindung fördernde Katalysatoren (C) können auch bei den erfindungsgemäßen Zusammensetzungen die gleichen Katalysatoren verwendet werden, die auch bei den bisher bekannten Zusammensetzungen zum Vernetzen von aliphatische Mehrfachbindungen enthaltenden Organosiliciumverbindungen mit Verbindungen, die Si-gebundenen Wasserstoff enthalten, zur Förderung der Vernetzung eingesetzt werden konnten. Als Bestandteil (C) werden vorzugsweise die oben genannten Katalysatoren (4) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organopolysiloxane (A) und (B) eingesetzt.

Als die Anlagerung von Si-gebundenem Wasserstoff an aliphatische Mehrfachbindung bei Raumtemperatur verzögernde Mittel, sogenannte Inhibitoren (D), können auch bei den erfindungsgemäßen Zusammensetzungen alle Inhibitoren gegebenenfalls verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol, 3,5-Dimethyl-1-hexin-3-ol und 3,7-Dimethyl-oct-l-in-6-en-3-ol Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor (D) in Mengen von 0,001 bis 10 Gew.-%, bezogen auf das Gesamtgewicht der Organopolysiloxane (A) und (B), eingesetzt.

Beispiele für weitere Bestandteile, die bei den erfindungsgemäßen Zusammensetzungen mitverwendet werden können, sind Mittel zur Einstellung der Trennkraft, Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^8(CH_3)_2SiO_{1/2} \quad \text{und} \quad SiO_2 ,$$

sogenannte MQ-Harze, wobei $R^8$ ein Wasserstoffatom, ein Methylrest oder $R^3$ bedeutet und die Einheiten der Formel $R^8(CH_3)_2SiO_{1/2}$ gleich oder verschieden sein können. Das Verhältnis von Einheiten der Formel $R^8(CH_3)_2SiO_{1/2}$ zu Einheiten der Formel $SiO_2$ beträgt vorzugsweise 0,6 bis 2. Die Siliconharze werden vorzuosweise in Mengen von 5

bis 80 Gew.-%, bezogen auf das Gesamtgewicht der Organopolysiloxane (A) und (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus aliphatisch ungesättigte Kohlenwasserstoffreste ausweisenden Organopolysiloxanen, Si-gebundenen Wasserstoff aufweisenden Organopolysiloxanen und die Anlagerung von Si-gebundenem Wasserstoff an aliphatische Doppelbindung fördernde Katalysatoren verwendet werden konnten. Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der aliphatisch ungesättigte Kohlenwasserstoffreste aufweisenden Organopolysiloxane (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendige Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

**Beispiel 1:**

Bei 25 °C versetzt man 180 g eines α,ω-Divinyldimethylpolysiloxan eines durchschnittlichen Molekulargewichts ($M_n$) von 1800 g/mol mit 0,1 mg Pt in Form einer 1 %igen Lösung des Karstedt-Katalysators in Vinylsiloxanpolymer und läßt 9,9 g Propyltris(dimethylsiloxy)silan zulaufen. Bei dem sogenannten Karstedt-Katalysator handelt es sich um einen Platin-1,3-Divinyl-1,1,3,3-tetramethyldisiloxan-Komplex, der im folgenden dem Katalysator entspricht, wie er nach US-A 3,775,452 (ausgegeben am 27.11.1973, Bruce D. Karstedt, General Electric Company) hergestellt wird. Das Gemisch wird ca. eine Stunde auf 100 °C erwärmt. Nach Verbrauch aller Si-gebundenen Wasserstoffatome wird abgekühlt. Das klare Produkt hat eine Viskosität von 190 $mm^2/s$ bei 25 °C und eine Jodzahl von 13,8 (entspricht ca. 543 mequ. C=C/kg). Die Jodzahl ist ein Maß für den Gehalt an aliphatischer Kohlenstoff-Kohlenstoff-Mehrfachbindung des Produktes und ist die Zahl, die angibt, wieviel g Jod von 100g untersuchtem Produkt gebunden werden.

**Beispiel 2:**

Ein Gemisch aus 145 g des α,ω-Divinyldimethylpolysiloxans aus Beispiel 1 und 43 g eines α,ω-Divinyldimethylpolysiloxan mit einer Viskosität von 500 $mm^2/s$ bei 25°C werden versetzt mit 5,4 g Propyltris(dimethylsiloxy)silan und 3,2 g 1,1,3,3-Tetramethyldisiloxan und bei 25 °C ca. 10 Minuten gut gerührt. Man fügt dann 0,5 mg Pt als Karstedt-Katalysator hinzu, heizt langsam auf ca. 100 °C auf und rührt das Gemisch ca. 1 Stunde bis zum kompletten Verbrauch der Si-gebundenen Wasserstoffatome. Nach Abkühlen auf 25 °C hat das polymere Produkt eine Viskosität von 450 $mm^2/s$ bei 25°C und eine Jodzahl von 8,5 (entspricht ca. 330 mequ. C=C/kg).

**Beispiel 3:**

201 g eines Equilibrates aus 1,3-Divinyl-1,1,3,3-tetramethyldisiloxan und eines Dimethyldichlorsilan-Hydrolysats mit der Jodzahl 21 werden bei 25 °C mit 0,4 mg Pt als Karstedt-Katalysator versetzt und auf 80 °C erwärmt. In diese Reaktionslösung dosiert man ein Gemisch aus 5,2 g Propyltris(dimethylsiloxy)silan und 3,1 g 1,1,3,3-Tetramethyldisiloxan, wobei sich diese um ca. 20 °C erwärmt. Man hält das polymere Gemisch eine weitere Stunde bei ca. 100 °C und destilliert flüchtige Bestandteile bei ca. 160 °C und 3 hPa ab. Das erhaltene Polymer hat eine Viskosität von 280 $mm^2/s$ bei 25 °C und eine Jodzahl von 9,0 (entspricht ca. 354 mequ. C=C/kg).

**Beispiel 4:**

223 g eines Equilibrates aus 1,3-Divinyl-1,1,3,3-tetramethyldisiloxan und eines Hydrolysats aus Dimethyldichlorsilan mit der Jodzahl 19 werden bei 25 °C nacheinander vermischt mit 5,8 g Phenyltris(dimethylsiloxy)silan, 3,1 g 1,1,3,3-Tetramethyldisiloxan und 0,5 mg Pt als Karstedt-Katalysator. Beim Aufheizen findet eine exotherme Reaktion statt, wonach die Innentemperatur eine Stunde lang bei ca. 100 °C gehalten wird. Anschließend werden flüchtige Bestandteile bei 160 °C und 3 hPa abdestilliert. Das so erhaltene Vinylpolymer hat bei 25 °C eine Viskosität von 290 $mm^2/s$ und eine Jodzahl von 8,6 (entspricht ca. 339 mequ. C=C/kg).

**Beispiel 5:**

Beispiel 4 wird wiederholt mit der Änderung, daß statt der 3,1 g des 1,1,3,3-Tetramethyldisiloxans nun 15,4 g eines α,ω-Dihydrodimethylpolysiloxans mit 0,30 Gew.-% Si-gebundenem Wasserstoff eingesetzt wird. Nach gleicher Durchführung und Aufarbeitung wie in Beispiel 4 erhält man ein Polymer mit einer Viskosität von 310 $mm^2/s$ bei 25°C und einer Jodzahl von 8,2 (entspricht ca. 323 mequ. C=C/kg).

**Beispiel 6:**

294 g des Equilibrates aus Beispiel 4 werden bei 25 °C mit 11,0 g Phenyltris(dimethylsiloxy)silan und 0,6 mg Pt in Form des Karstedt-Katalysators vermischt. Nach einer Stunde bei 100 °C sind sämtliche Si-gebundenen Wasserstoffatome abreagiert. Anschließend werden flüchtige Bestandteile bei 160°C und 3hPa abdestilliert. Es wird ein Polymer erhalten mit einer Viskosität von 320 $mm^2/s$ bei 25°C und einer Jodzahl von 11,3 (entspricht ca. 445 mequ. C=C/kg).

**Beispiel 7:**

234 g eines linearen Dimethylpolysiloxans mit einer Viskosität von 48 $mm^2/s$ bei 25°C mit 90 Mol-% Vinyl- und 10 Mol-% Methylendgruppen werden bei 25 °C mit 5,0 g Phenyltris(dimethylsiloxy)silan und 2,7 g 1,1,3,3-Tetramethyldisiloxan vermischt. Nach Homogenisierung werden 0,5 mg Platin in Form des Karstedt-Katalysators gelöst in Vinylsiloxanpolymer (1 % Pt) zugefügt, die Gesamtmischung danach auf 100 °C erwärmt und dabei ca. eine Stunde gut gerührt. Man erhält ein farbloses, klares Polymer mit einer Viskosität von 280 $mm^2/s$ und einer Jodzahl von 6,6 (entspricht 260 mequ. C=C/kg). Das $^1$H-NMR-Spektrum zeigt ein $M^v/M$-Verhältnis von 78:22. ($M^v = CH_2{=}CH(CH_3)_2SiO_{1/2}$, $M = (CH_3)_3SiO_{1/2}$)

**Beispiel 8:**

Das Vinylpolymer aus Beispiel 4 wird bezüglich der Aushärtegeschwindigkeit in einer Beschichtungsmasse getestet. Durch Vermischen der nachfolgend genannten Bestandteile wird eine Beschichtungsmasse A (Vinylpolymer aus Beispiel 4) und als Vergleich eine Beschichtungsmasse B hergestellt:

| | | |
|---|---|---|
| Beschichtungsmasse (A) | 2000,00 g | Sternpolymer (Beispiel 4) |
| | 5,0 g | Ethinylcyclohexanol |
| | 86,0 g | Vernetzer V 24 |
| | 20,0 g | Katalysator OL |
| Beschichtungsmasse (B) | 2000,00 g | lineares $\alpha,\omega$-Divinyldimethylpolysiloxan mit einer Viskosität von 200 $mm^2/s$ bei 25°C |
| | 5,0 g | Ethinylcyclohexanol |
| | 78,0 g | Vernetzer V 24 |
| | 20,0 g | Katalysator OL |

Vernetzer V24 ist ein Mischpolymerisat aus Trimethylsiloxan- und Methylhydrogensiloxaneinheiten mit einer Viskosität von 20 $mm^2/s$ bei 25 °C und Katalysator OL ist ein Platinkatalysator, wobei beide Verkaufsprodukte der Wacker-Chemie GmbH, Burghausen/Deutschland sind. Die Beschichtungsmassen weisen jeweils ein SiH/C=C-Verhältnis von 2,0 und ein Inhibitor/Pt-Verhältnis von 40 : 1 auf und enthalten 100 ppm Pt (berechnet als Metall). Die Gelzeiten bei 25 °C betrugen jeweils ca. 70 Stunden.

Die Beschichtungsmassen werden jeweils über ein 5-Walzen-Auftragswerk auf superkalandriertes Papier in ca. 1,0 µm Schichtstärke appliziert. Die Temperatur des Trockenofens (4,6 m Kanallänge) wird konstant bei 150 °C gehalten.

| Bahngeschwindigkeit [ft/min] | Aushärtezeit [sec.] | max. Bahntemp. [°C] | Aushärtung Masse A | Aushärtung Masse B |
|---|---|---|---|---|
| 300 | 3,00 | 115 | + | + |
| 400 | 2,25 | 113 | + | + |
| 500 | 1,80 | 110 | + | + |
| 600 | 1,50 | 108 | + | (-) |
| 700 | 1,29 | 106 | + | - |
| 800 | 1,13 | 102 | + | |
| 900 | 1,00 | 99 | (-) | |
| 1000 | 0,90 | 96 | - | |

+ bedeutet gute Aushärtung, kein Abrieb, keine Schmierschicht
(-) bedeutet Aushärtung, aber geringe Schmierschicht
- bedeutet keine Aushärtung

Es zeigt sich eindeutig, daß die erfindungsgemäße Beschichtungsmasse im Vergleich zur Beschichtungsmasse mit Linearpolymer auch bei wesentlich höherer Bahngeschwindigkeit und damit auch tieferer Substrattemperatur noch gut aushärtet.

**Beispiel 9:**

Die Beschichtungsmassen A und B aus Beispiel 8 werden nun bei konstanter Bahngeschwindigkeit, aber bei verschiedenen Temperaturen verglichen. Die Bahngeschwindigkeit beträgt generell 300 ft./min, was eine Aushärtezeit von 3,0 Sekunden bedeutet.

| Ofentemperatur [°C] | max. Bahntemp. [°C] | Aushärtung Masse A | Aushärtung Masse B |
|---|---|---|---|
| 116 | 98 | + | + |
| 110 | 94 | + | (-) |
| 104 | 92 | + | - |
| 99 | 89 | + | - |
| 93 | 87 | - | - |

Die erfindungsgemäße Formulierung kann bei deutlich niedrigeren Temperaturen komplett gehärtet werden.

Beispiel 10:

588 g 1,3-Divinyltetramethyldisiloxan werden mit Karstedt-Katalysator (entsprechend 6 mg Platin) versetzt und auf 138 °C erwärmt. Innerhalb einer Stunde werden insgesamt 336 g Phenyltris(dimethylsiloxy)silan dosiert, wobei die Sumpftemperatur stetig auf 156 °C steigt. Zur Vervollständigung des Umsatzes an Aktivwasserstoff hält man das Reaktionsgemisch noch 2 Stunden bei 140 °C. Das überschüssige Disiloxan wird im Vakuum entfernt, worauf man 747 g eines klaren Öles mit der Viskosität 111 $mm^2/s$ bei 25 °C erhält, welches 2,02 Mol Vinylgruppen pro kg enthält. Der Umsatz der Aktivwasserstoffgruppen beträgt 99,6 %.

88 g des oben erhaltenen Produktes werden zusammen mit 440 g eines Polydimethylsiloxanes mit Trimethylsiloxyendgruppen der Viskosität 342 $mm^2/s$ bei 25 °C und 50 mg $PNCl_2$-Katalysator bei 142 °C 2 Stunden lang equilibriert. Der Katalysator wird durch 10 g MgO bei 25 °C desaktiviert. Filtration und Entfernung flüchtiger Produktbestandteile bei 160 °C/3 hPa ergeben ein klares Öl mit einer Viskosität von 240 $mm^2/s$ bei 25 °C und einer Vinylgruppenkonzentration von 0,30 Mol pro kg.

## Patentansprüche

**1.** Vernetzbare Zusammensetzungen enthaltend

(A) aliphatisch ungesättigte Kohlenwasserstoffreste aufweisende Organopolysiloxane
(B) Si-gebundene Wasserstoffatome aufweisende Organopolysiloxane
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als (A) aliphatisch ungesättigte Kohlenwasserstoffreste aufweisende Organopolysiloxane solche enthaltend

(a) je Molekül mindestens eine Einheit der allgemeinen Formel

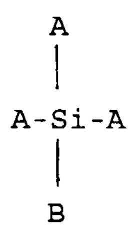 (I),

wobei A eine Gruppe der allgemeinen Formel

$$-(OSiR^1R^2)_z-(OSiR_2)_x-Y-SiR_2O-$$

bedeutet, R gleich oder verschieden ist und einen einwertigen, aliphatisch gesättigten oder aromatischen Kohlenwasserstoffrest mit 1 bis 12 Kohlenstoffatomen je Rest bedeutet,
$R^1$ eine Gruppe der allgemeinen Formel

$$-OSiR_2-Y-SiR_2O-$$

bedeutet,
$R^2$ die Bedeutung von R, $R^1$ oder R' hat, wobei R' einen einwertigen, aliphatisch gesättigten oder aromatischen Kohlenwasserstoffrest mit 1 bis 12 Kohlenstoffatomen je Rest, der ein oder mehrere Heteroatome ausgewählt aus der Gruppe von O, S, N, Si und Ti enthält, bedeutet,
Y eine zweiwertige Kohlenwasserstoffgruppe der allgemeinen Formel

$$-CH_2CHR^5(-R^4)_v-$$

bedeutet, $R^4$ einen zweiwertigen Kohlenwasserstoffrest mit 1 bis 10 Kohlenwasswerstoffatomen je Rest oder eine chemische Bindung bedeutet, wenn v den Wert 0 hat, $R^5$ ein Wasserstoffatom ist oder die Bedeutung von R hat,
v 0 oder 1 ist,
x gleich oder verschieden ist, 0 oder 1 ist und
z gleich oder verschieden ist, 0 oder 1 ist,
und B die Bedeutung von A oder R oder R' hat, mit der Maßgabe, daß B gelich R oder R' ist, wenn x 0 ist,

(b)je Molekül mindestens eine Einheit der allgemeinen Formel

$$O_{1/2}SiR_2R^3 \quad (II),$$

wobei R die oben dafür angegebene Bedeutung hat und $R^3$ einen aliphatisch ungesättigten Kohlenwasserstoffrest der allgemeinen Formel

$$H_2C{=}CR^5(-R^4)_v-$$

bedeutet, wobei $R^4$ und $R^5$ die oben dafür angegebene Bedeutung haben,

(c) gegebenenfalls Einheiten der allgemeinen Formel

$$O_{1/2}SiR_3 \quad (III),$$

wobei R die oben dafür angegebene Bedeutung hat,

(d) gegebenenfalls Einheiten der allgemeinen Formel

$$SiR_2O \quad (IV),$$

wobei R die oben dafür angegebene Bedeutung hat, und

(e) gegebenenfalls Einheiten der allgemeinen Formel

$$O_{1/2}SiR_2\text{-}Y\text{-}SiR_2O_{1/2} \quad \text{(V)},$$

wobei R die oben dafür angegebene Bedeutung hat,

verwendet werden.

2. Vernetzbare Zusammensetzungen nach Anspruch 1, dadurch gekennzeichnet, daß der Rest $R^3$ ein Vinylrest ist.

3. Vernetzbare Zusammensetzungen nach Anspruch 1 oder 2, dadurch gekennzeichnet, daß Y eine Gruppe der Formel $-CH_2CH_2-$ ist.

4. Vernetzbare Zusammensetzungen nach Anspruch 1, 2 oder 3, dadurch gekennzeichnet, daß x 1 und z 0 ist.

5. Vernetzbare Zusammensetzungen enthaltend

(A) aliphatisch ungesättigte Kohlenwasserstoffreste aufweisende Organopolysiloxane
(B) Si-gebundene Wasserstoffatome aufweisende Organopolysiloxane
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als (A) aliphatisch ungesättigte Kohlenwasserstoffreste aufweisende Organopolysiloxane solche verwendet werden, herstellbar indem in einem ersten Schritt
Verbindungen (1) der allgemeinen Formel

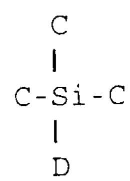

wobei C einen Rest der allgemeinen Formel

$$-(OSiR^6R^7)_z(OSiR_2)_xH$$

bedeutet, wobei x gleich oder verschieden ist, 0 oder 1 ist und z gleich oder verschieden ist, 0 oder 1 ist,

$R^6$ einen Rest der allgemeinen Formel

$$-OSiR_2H$$

bedeutet und $R^7$ die Bedeutung von R, R' oder $R^6$ hat, wobei R gleich oder verschieden ist und einen aliphatisch gesättigten oder aromatischen Kohlenwasserstoffrest mit 1 bis 12 Kohlenstoffatomen je Rest bedeutet und

R' einen einwertigen aliphatisch gesättigten oder aromatischen Kohlenwasserstoffrest mit 1 bis 12 Kohlenstoffatomen je Rest, der ein oder mehrere Heteroatome ausgewählt aus der Gruppe von O, S, N, Si und Ti enthält, bedeutet,

und D die Bedeutung von C oder R oder R' hat, mit der Maßgabe, daß D gleich R oder R' ist, wenn x 0 ist,

und gegebenenfalls Verbindungen (2) der allgemeinen Formel

$$HR_2SiO(R_2SiO)_nSiR_2H$$

wobei R gleich oder verschieden ist und einen aliphatisch gesättigten oder aromatischen Kohlenwasserstoffrest mit 1 bis 12 Kohlenstoffatomen je Rest bedeutet und

n 0 oder eine ganze Zahl im Wert von 1 bis 100 ist,

mit Organo(poly)siloxanen (3) der allgemeinen Formel

$$R^3R_2SiO(R_2SiO)_mSiR_2R^3$$

wobei R die oben dafür angegebene Bedeutung hat und

$R^3$ einen aliphatisch ungesättigten Kohlenwasserstoffrest der allgemeinen Formel

$$H_2C=CR^5(-R^4)_v-$$

bedeutet, wobei $R^4$ einen zweiwertigen Kohlenwasserstoffrest mit 1 bis 10 Kohlenwasserstoffatomen je Rest oder eine chemische Bindung bedeutet, wenn v den Wert 0 hat und $R^5$ ein Wasserstoffatom ist oder die Bedeutung von R hat und

m 0 oder eine ganze Zahl im Wert von 1 bis 200 ist,

in Gegenwart von die Anlagerung von aliphatische Doppelbindung an Si-gebundenen Wasserstoff fördernde Katalysatoren (4)

umgesetzt werden,
wobei das eingesetzte Verhältnis von aliphatischer Doppelbindung in Organo(poly)siloxan (3) zu Si-gebundenem Wasserstoff in Verbindungen (1) und (2) 1,3 bis 5,0 beträgt,
und gegebenenfalls in einem zweiten Schritt die so erhaltenen aliphatisch ungesättigte Kohlenwasserstoffreste aufweisenden Organopolysiloxane mit Organopolysiloxanen (5) ausgewählt aus der Gruppe bestehend aus linearen, endständige Triorganosiloxygruppen aufweisenden Organopolysiloxanen und linearen, endständige Hydroxylgruppen aufweisenden Organopolysiloxanen equilibriert werden.

**6.** Verwendung der vernetzbaren Zusammensetzungen nach einem der Ansprüche 1 bis 5 zur Herstellung von klebrige Stoffe abweisenden Überzügen.

## Claims

**1.** Crosslinkable compositions comprising

(A) organopolysiloxanes containing aliphatically unsaturated hydrocarbon radicals
(B) organopolysiloxanes containing Si-bonded hydrogen atoms
(C) catalysts which promote the addition of Si-bonded hydrogen onto an aliphatic multiple bond
and, if appropriate,
(D) agents which delay the addition of Si-bonded hydrogen onto an aliphatic multiple bond at room temperature,

characterized in that the (A) organopolysiloxanes containing aliphatically unsaturated hydrocarbon radicals used are those containing

(a) at least one unit, per molecule, of the general formula

$$\begin{array}{c} A \\ | \\ A\text{-}Si\text{-}A \\ | \\ B \end{array} \quad (I) ,$$

in which A is a group of the general formula

$$-(OSiR^1R^2)_z-(OSiR_2)_x-Y-SiR_2O_{1/2},$$

R is identical or different and is a monovalent, aliphatically saturated or aromatic hydrocarbon radical having 1 to 12 carbon atoms per radical,

$R^1$ is a group of the general formula

$$-OSiR_2-Y-SiR_2O_{1/2},$$

$R^2$ has the meaning of R, $R^1$ or R', where R' is a monovalent, aliphatically saturated or aromatic hydrocarbon radical having 1 to 12 carbon atoms per radical, which contains one or more heteroatoms chosen from the group consisting of O, S, N, Si and Ti,

Y is a divalent hydrocarbon group of the general formula

$$-CH_2CHR^5(-R^4)_v-,$$

$R^4$ is a divalent hydrocarbon radical having 1 to 10 carbon atoms per radical or a chemical bond, if v has the value 0,

$R^5$ is a hydrogen atom or has the meaning of R,

v is 0 or 1,

x is identical or different and is 0 or 1 and

z is identical or different and is 0 or 1,

and B has the meaning of A or R or R', with the proviso that B is R or R' if x is 0,

(b) at least one unit, per molecule, of the general formula

$$O_{1/2}SiR_2R^3 \quad (II),$$

wherein R has the meaning given above for this radical and
$R^3$ is an aliphatically unsaturated hydrocarbon radical of the general formula

$$H_2C{=}CR^5(-R^4)_v-,$$

in which $R^4$ and $R^5$ have the meaning given above for these radicals,

(c) if appropriate units of the general formula

$$O_{1/2}SiR_3 \qquad (III),$$

in which R has the meaning given above for this radical,

(d) if appropriate units of the general formula

$$SiR_2O \qquad (IV),$$

in which R has the meaning given above for this radical, and

(e) if appropriate units of the general formula

$$O_{1/2}SiR_2\text{-}Y\text{-}SiR_2O_{1/2} \qquad (V),$$

in which R has the meaning given above for this radical.

**2.** Crosslinkable compositions according to Claim 1, characterized in that the radical $R^3$ is a vinyl radical.

**3.** Crosslinkable compositions according to Claim 1 or 2, characterized in that Y is a group of the formula $-CH_2CH_2-$.

**4.** Crosslinkable compositions according to Claim 1, 2 or 3, characterized in that x is 1 and z is 0.

**5.** Crosslinkable compositions comprising

(A) organopolysiloxanes containing aliphatically unsaturated hydrocarbon radicals
(B) organopolysiloxanes containing Si-bonded hydrogen atoms
(C) catalysts which promote the addition of Si-bonded hydrogen onto an aliphatic multiple bond
and, if appropriate,
(D) agents which delay the addition of Si-bonded hydrogen onto an aliphatic multiple bond at room temperature,

characterized in that the (A) organopolysiloxanes containing aliphatically unsaturated hydrocarbon radicals used are those which can be prepared by reacting, in a first step,
compounds (1) of the general formula

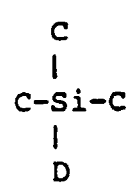

in which C is a radical of the general formula

$$-(OSiR^6R^7)_z(OSiR_2)_xH$$

in which x is identical or different and is 0 or 1 and z is identical or different and is 0 or 1,

$R^6$ is a radical of the general formula

$$-OSiR_2H$$

and $R^7$ has the meaning of R, R' or $R^6$,

in which R is identical or different and is an aliphatically saturated or aromatic hydrocarbon radical having 1 to 12 carbon atoms per radical and

R' is a monovalent aliphatically saturated or aromatic hydrocarbon radical having 1 to 12 carbon atoms per radical, which contains one or more heteroatoms chosen from the group consisting of 0, S, N, Si and Ti, and

D has the meaning of C or R or R', with the proviso that D is R or R' if x is 0,

and, if appropriate, compounds (2) of the general formula

$$HR_2SiO(R_2SiO)_nSiR_2H$$

in which R is identical or different and has an aliphatically saturated or aromatic hydrocarbon radical having 1 to 12 carbon atoms per radical and

n is 0 or an integer having a value from 1 to 100, with organo(poly)siloxanes (3) of the general formula

$$R^3R_2SiO(R_2SiO)_mSiR_2R^3$$

in which R has the meaning given above for this radical and

$R^3$ is an aliphatically unsaturated hydrocarbon radical of the general formula

$$H_2C{=}CR^5(-R^4)_v-$$

in which $R^4$ is a divalent hydrocarbon radical having 1 to 10 carbon atoms per radical or a chemical bond, if v has the value 0, and $R^5$ is a hydrogen atom or has the meaning of R, and

m is 0 or an integer having a value from 1 to 200, in the presence of catalysts (4) which promote the addition of an aliphatic double bond onto Si-bonded hydrogen,

the ratio employed of aliphatic double bond in organo(poly)siloxane (3) to Si-bonded hydrogen in compounds (1) and (2) being 1.3 to 5.0,

and, if appropriate, in a second step, equilibrating the organopolysiloxanes containing aliphatically unsaturated hydrocarbon radicals thus obtained with organopolysiloxanes (5) chosen from the group consisting of linear organopolysiloxanes containing terminal triorganosiloxy groups and linear organopolysiloxanes containing terminal hydroxyl groups.

**6.** Use of the crosslinkable compositions according to one of Claims 1 to 5 for the production of antiadhesive coatings.

**Revendications**

**1.** Compositions réticulables, contenant:

(A) des organopolysiloxanes présentant des radicaux hydrocarbonés aliphatiquement insaturés;
(B) des organopolysiloxanes présentant des atomes d'hydrogène liés au Si;
(C) des catalyseurs activant l'addition d'hydrogène lié au Si à une liaison multiple aliphatique, et le cas échéant,
(D) un agent retardant l'addition à température ambiante d'hydrogène lié au Si à une liaison multiple aliphatique,

caractérisées en ce qu'on utilise, comme organopolysiloxanes présentant des radicaux hydrocarbonés aliphatiquement insaturés (A), ceux contenant:

(a) pour chaque molécule, au moins une unité de formule générale :

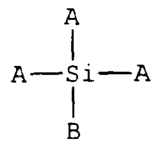

(I),

dans laquelle A signifie un groupement de formule générale

$$-(OSiR^1R^2)_Z-(OSiR_2)_X-Y-SiR_2O-$$

R est identique ou différent et signifie un radical hydrocarboné monovalent aliphatiquement saturé ou aromatique avec 1 à 12 atomes de carbone par radical;
$R^1$ signifie un groupement de formule générale

$$-OSiR_2-Y-SiR_2O-$$

$R^2$ a la signification de R, $R^1$ ou R', R' signifiant un radical hydrocarboné monovalent aliphatiquement saturé ou aromatique avec 1 à 12 atomes de carbone par radical, contenant un ou plusieurs hétéroatomes choisis dans le groupe de O, S, N, Si et Ti;
Y signifie un radical hydrocarboné bivalent de formule générale :

$$-CH_2CHR^5(-R^4)_V-$$

$R^4$ signifie un radical hydrocarboné bivalent avec 1 à 10 atomes de carbone par radical ou une liaison chimique, lorsque v possède la valeur 0;
$R^5$ est un atome d'hydrogène ou a la signification de R,
v est 0 ou 1;
x est identique ou différent, est 0 ou 1 et
z est identique ou différent, est 0 ou 1,
et B a la signification de A ou R ou R', étant entendu que B est identique à R ou R', lorsque x est 0;

(b) pour chaque molécule, au moins une unité de formule générale :

$$O_{1/2}SiR_2R^3 \quad (II),$$

dans laquelle R a la signification donnée plus haut pour celui-ci et $R^3$ signifie un radical hydrocarboné aliphatiquement insaturé de formule générale :

$$H_2C{=}CR^5(-R^4)_v-$$

dans laquelle $R^4$ et $R^5$ ont la signification donnée plus haut pour ceux-ci;

(c) le cas échéant, des unités de formule générale :

$$O_{1/2}SiR_3 \quad (III),$$

dans laquelle R a la signification donnée plus haut pour celui-ci;

(d) le cas échéant, des unités de formule générale :

$$SiR_2O \qquad (IV),$$

dans laquelle R a la signification donnée plus haut pour celui-ci, et

(e) le cas échéant, des unités de formule générale :

$$O_{1/2}SiR_2\text{-}Y\text{-}SiR_2O_{1/2} \qquad (V),$$

dans laquelle R a la signification donnée plus haut pour celui-ci.

**2.** Compositions réticulables suivant la revendication 1, caractérisées en ce que le radical $R^3$ est un radical vinyle.

**3.** Compositions réticulables suivant la revendication 1 ou 2, caractérisées en ce que Y est un groupement de formule $-CH_2CH_2-$.

**4.** Compositions réticulables suivant la revendication 1, 2 ou 3, caractérisées en ce que x est 1 et z est 0.

**5.** Compositions réticulables, contenant:

(A) des organopolysiloxanes présentant des radicaux hydrocarbonés aliphatiquement insaturés;
(B) des organopolysiloxanes présentant des atomes d'hydrogène liés au Si;
(C) des catalyseurs activant l'addition d'hydrogène lié au Si à une liaison multiple aliphatique, et le cas échéant,
(D) un agent retardant l'addition à température ambiante d'hydrogène lié au Si à une liaison multiple aliphatique,

caractérisées en ce qu'on utilise, comme organopolysiloxanes présentant des radicaux hydrocarbonés aliphatiquement insaturés (A), ceux qui peuvent être préparés en faisant réagir, dans une première étape:
des composés (1) de formule générale :

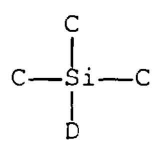

dans laquelle C signifie un radical de formule générale :

$$-(OSiR^6R^7)_Z(OSiR_2)_XH$$

dans laquelle x est identique ou différent, est 0 ou 1 et z est identique ou différent, est 0 ou 1,

$R^6$ signifie un radical de formule générale :

$$-OSiR_2H$$

et $R^7$ a la signification de R, R' ou $R^6$, R étant identique ou différent et signifiant un radical hydrocarboné aliphatiquement saturé ou aromatique avec 1 à 12 atomes de carbone par radical, et

R' signifiant un radical hydrocarboné monovalent aliphatiquement saturé ou aromatique avec 1 à 12 atomes de carbone par radical, qui contient un ou plusieurs hétéroatomes choisis dans le groupe de O, S, N, Si et Ti,

et D a la signification de C ou R ou R', étant entendu que D est identique à R ou R', lorsque x est 0,

et le cas échéant, des composés (2) de formule générale :

$$HR_2SiO(R_2SiO)_nSiR_2H$$

dans laquelle R est identique ou différent et signifie un radical hydrocarboné aliphatiquement saturé ou aromatique avec 1 à 12 atomes de carbone par radical et n est 0 ou un nombre entier de valeur comprise entre 1 et 100,

avec des organo(poly)siloxanes (3) de formule générale :

$$R^3R_2SiO(R_2SiO)_mSiR_2R^3$$

dans laquelle R a la signification donnée plus haut pour celui-ci, et $R^3$ signifie un radical hydrocarboné aliphatiquement saturé de formule générale :

$$H_2C{=}CR^5(-R^4)_v-$$

dans laquelle $R^4$ signifie un radical hydrocarboné bivalent avec 1 à 10 atomes de carbone par radical ou une liaison chimique, lorsque v possède la valeur 0, et

$R^5$ est un atome d'hydrogène ou a la signification de R, et

m est 0 ou un nombre entier d'une valeur allant de 1 à 200,

en présence de catalyseurs (4) activant l'addition d'une double liaison aliphatique à un hydrogène lié au Si,

le rapport utilisé de doubles liaisons aliphatiques dans l'organo(poly)siloxane (3) à l'hydrogène lié au Si dans les composés (1) et (2) s'élevant de 1,3 à 5,0,

et le cas échéant, dans une deuxième étape, les organopolysiloxanes présentant des radicaux hydrocarbonés aliphatiquement insaturés ainsi obtenus sont équilibrés avec des organopolysiloxanes (5) choisis dans le groupe composé d'organopolysiloxanes linéaires présentant des groupements triorganosiloxy en fin de chaîne et d'organopolysiloxanes linéaires présentant des groupements hydroxyle en fin de chaîne.

**6.** Utilisation des compositions réticulables suivant l'une des revendications 1 à 5, pour la préparation de revêtements repoussant les matières adhésives.